# EUROPEAN PATENT APPLICATION

(11) **EP 2 719 778 A1**
(43) Date of publication of application: **16.04.2014**
(21) Application number: 12306261.4
(22) Date of filing: 12.10.2012
(51) Int. Cl.: C21B 5/00, C21B 5/06, C21B 7/00, F27D 17/00, F25J 3/04, C10K 3/00

(54) **Blast-furnace process with CO2-lean blast furnace gas recycle and production plant for same**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Grant, Michael G. K., 78000 Versailles (FR); Delebecque, Aude, 78114 Magny les Hameaux (FR); Tsiava, Rémi, 91250 Saint Germain-les-Corbeil (FR); Devaux, Michel, 77680 Roissy-en-Brie (FR)
(74) Representative: De Vleeschauwer, Natalie Y.L.D.

(57) **Abstract**

Process for producing metal from ore in a blast furnace and blast-furnace plant for use in said process, whereby oxygen is heated in an oxygen preheating installation upstream of the blast furnace and hot oxygen thus obtained is introduced into the blast furnace and whereby CO₂ is extracted from the blast furnace gas to generate CO₂-lean blast furnace gas and CO₂-lean blast furnace gas thus obtained is likewise introduced into the blast furnace.

## Description

The blast furnace was and continues to be the primary method worldwide of producing metal from ore, and in particular for producing iron for the manufacture of steel. It accounts for approximately 70% of the iron production worldwide. In geographical areas with limited access to scrap, steel manufacture relies almost entirely on blast furnaces.

Blast furnaces require coke for the production of metal. They also require significant amounts of blast or wind, typically air.

Blast furnace operation requires a sufficiently high RAFT (Raceway Adiabatic Flame Temperature). For example, in the case of iron production, the RAFT must typically be of the order of 1950°C to 2300°C.

A main preoccupation in blast furnace operation is the reduction of coke consumption per specific mass of metal produced so as to decrease the metal production costs and emissions into the atmosphere, in particular of the greenhouse gas CO₂. Indeed, the blast furnace gas, i.e. the top gas generated by the blast furnace contains significant amounts of CO₂. Typically, blast furnace gas from iron production contains about 20%vol to 23%vol of CO₂ and furthermore about 20%vol to 30%vol of CO, around 50%vol of N₂ and 1%vol to 4%vol of H₂.

It is known to extract CO₂ from the blast furnace gas so as to generate CO₂-lean blast furnace gas and to recycle the CO₂-lean blast furnace gas back to the blast furnace in order to reduce coke consumption. The CO₂-lean blast furnace gas is introduced into the blast furnace directly into the shaft and/or via one or more tuyeres. The CO₂-extraction reduces or even eliminates the strongly endothermic reaction of the CO₂ with hot coke in the blast furnace and the corresponding detrimental cooling effect.

This known method reduces coke consumption and CO₂ emissions, but significantly increases oxygen consumption by the blast furnace. According to one embodiment of this known method the blast air is entirely replaced with oxygen so as to meet the oxygen requirement of the blast furnace.

In spite of the CO₂ extraction from the blast furnace gas, the CO₂-lean blast furnace gas recycle still has a significant detrimental cooling effect on the RAFT in the blast furnace, in particular when all or part of the recycled CO₂-lean blast furnace gas is injected into the blast furnace via one or more tuyeres.

In order to mitigate this cooling effect of blast furnace gas recycle, it is known to heat the blast furnace gas after CO₂ extraction and before its reintroduction into the blast furnace in the form of CO₂-lean gas. However, for technical process reasons and due to the composition of the recycled blast furnace gas, the temperature of the recycled blast furnace gas in the equipment for heating same is kept within a limited range of temperatures. When the recycled blast furnace gas is heated to temperatures outside this specific range of temperatures, phenomena such as carbon deposition and carbon dusting can cause premature severe and even fatal damage to the recycled blast furnace gas heating equipment, such as, in particular, hot stoves. As a consequence, heating of the CO₂-lean recycled blast furnace gas is generally limited to temperatures of 900°C or less, typically of 400°C or less so that, in practice, the recycled blast furnace gas is introduced back into the blast furnace at a temperature well below the required RAFT. Consequently, even when CO₂ is extracted from the blast furnace gas and the recycled blast furnace gas is heated before being introduced into the blast furnace, the recycled blast furnace gas still produces a detrimental cooling effect in the blast furnace.

It is an aim of the present invention to overcome, at least in part, the disadvantages of the above known blast furnace processes.

Thereto the present invention provides a blast furnace process in which:
- coke consumption is reduced due to the recycle of CO₂-lean blast furnace gas,
- the oxygen requirement of the blast furnace is met and
- the cooling effect of the CO₂-lean blast furnace gas recycle is compensated.

The present invention also provides a blast furnace plant adapted for use in such a process.

In accordance with the present invention, there is provided a process in which metal is produced from ore in a blast furnace, said blast furnace further generating blast furnace gas.

The blast furnace may produce iron, and in particular iron for steelmaking, ferro-alloys, such as, for example, ferro-manganese, or non-ferrous metal, such as, for example, lead.

In the process of the invention, CO₂ is extracted from the blast furnace gas so to generate CO₂-lean blast furnace gas and at least part of the CO₂-lean blast furnace gas is recycled and introduced into the blast furnace. Oxygen is heated upstream of the blast furnace so as to generate hot oxygen and the hot oxygen is introduced into the blast furnace. The oxygen may usefully be heated to a temperature between 50°C and 1300°C, preferably between 400°C and 1300°C, more preferably between 600°C and 1300°C and most preferably between 800°C and 1300°C, ore even more.

The heating of the oxygen before it is injected compensates, at least in part, for the cooling effect of the recycled blast furnace gas in the blast furnace.

In the present context, "oxygen" refers to a gas having an O₂-content of at least 50%vol O₂ and containing less than 5%vol H₂O and less than 5%vol of CO and CO₂ (combined).

Typically, the oxygen used in accordance with the present invention is obtained in an air separation unit (ASU) but it can be from a VSA (vacuum swing adsorption unit) or any oxygen producing plant (oxygen plant) and is transported to the blast furnace plant for use in the blast furnace. The oxygen is typically transported from the oxygen plant to the blast furnace or blast furnace plant by means of a pipeline or a pipeline network.

The heating of the oxygen in accordance with the present invention thus differs from the known methods used for heating air or O₂-enriched air to be supplied as blast to a blast furnace, typically in hot stoves upstream of the blast furnace. Indeed, in the known methods for heating O₂-enriched air, the O₂-content of the enriched air is kept below or at most at 30%vol O₂ to 35%vol O₂ in order to ensure safe operation of the hot stoves and so as to prevent spontaneous ignition caused by even small leaks of oxygen-enriched hot air in the hot stoves or hot blast piping.

The heating of oxygen in accordance with the present invention also differs from the disclosure of EP-A-0922772. EP-A-0922772 describes an alternative system for injecting hot oxygen-enriched air as blast into a blast furnace. According to EP-A-0922772, a blast air stream is heated in a heater, for example to a temperature of from 870°C to 1320°C, fuel is passed into the heated blast air stream and a jet of oxygen is injected into the hot blast air stream at a velocity and at a temperature higher than those of the blast air stream, the temperature of the jet of oxygen being for example from 1200°C to 1650°C. As a consequence of thus injecting fuel and oxygen in the blast air stream, fuel combusts with oxygen in said stream upstream of the blast furnace. The resulting hot blast stream is injected into the blast furnace.

For generating the jet of oxygen at a temperature higher than the temperature of the heated blast air stream prior to its injection into said blast air stream, EP-A-0922772 teaches the use of the thermal nozzle combustion method described in EP-A-0590572.

According to said thermal-nozzle combustion method oxidant having an oxygen concentration of at least 30%vol is supplied at an initial velocity within an oxidant supply duct. Fuel is injected into said duct so as to combust at most 20% of the oxygen of the oxidant, whereby the combustion reaction products mix with the remaining oxygen of the oxidant and the temperature of remaining oxidant is raised within the duct. The resulting mixture is then ejected from the duct as heated oxidant at an exit velocity which exceeds the initial oxidant velocity.

As a consequence, even with an oxidant having an O₂-content of the order of 50%vol O₂, what is injected into the blast furnace according to EP-A-0922772 is not a stream of hot oxygen, as defined herein, nor even a stream of hot O₂-enriched air, but rather a mixture of air, oxygen and combustion products, such as in particular CO₂ and H₂O generated by both the combustion of fuel in the oxidant to produce heated oxidant according to EP-A-0590572 and the combustion of fuel with oxygen in the heated blast air stream as described in EP-A-0922772 itself. Furthermore, due to the strongly endothermic reaction of CO₂ of H₂O with hot coke in the blast furnace, the method according to EP-A-0922772 provides no significant improvement or even no improvement at all compared to the above-described known methods for heating air or O₂-enriched air in hot stoves upstream of the blast furnace.

According to the invention, the CO₂-lean blast furnace gas is advantageously also heated, in a gas preheating installation upstream of the blast furnace, such as hot stoves, so that the recycled blast furnace gas is introduced into the furnace as hot CO₂-lean blast furnace gas. In said gas preheating installation, the CO₂-lean gas may be heated to a temperature between 25°C and 1300°C. For injection via the tuyeres, the CO₂-lean gas is preferably heated to a temperature between 50°C and 1000°C, more preferably between 850°C and 950°C, or even more.

In the gas preheating installation, the CO₂ -lean gas may usefully be heated to a temperature between 700°C and 1050°C for injection in the stack of the blast furnace, preferably between 800°C and 1000°C and more preferably between 850°C and 950°C.

According to a preferred embodiment of the present invention, the oxygen is preferably heated by a method and with an oxygen preheating installation as described in co-pending European patent application EP 12306253.1.

In that case the oxygen is heated as follows: in the oxygen preheating installation, hot flue gas is generated by combusting fuel with oxidizer, and the oxygen is heated by direct or indirect heat exchange with the hot flue gas.

"Direct heat exchange" between two fluids refers to the process whereby the fluids are physically separated by a solid heat exchange wall and whereby thermal energy is transferred from one fluid to the other across said heat exchange wall. The heat exchange wall can have any suitable shape, such as, flat, tubular, corrugated, etc. "Indirect heat exchange" between two fluids refers to the process whereby thermal energy is transferred by direct heat exchange from one of the two fluids to an intermediate fluid and whereby thermal energy is then transferred by direct heat exchange from the intermediate fluid to the other of the two fluids. Indirect heat exchange can take place in a single device, in which, for example, the first of the two fluids is separated from the intermediate fluid by a first solid heat exchange wall and in which the intermediate fluid is separated from the second of the two fluids by a second solid heat exchange wall. Indirect heat exchange can also take place in two distinct devices, for example, through direct heat exchange from the first of the two fluids to the intermediate fluid in a first heat exchanger, transport of the heated intermediate fluid from the first heat exchanger to a second heat exchanger and direct heat exchange between the intermediate fluid and the second of the two fluids in the second heat exchanger. The intermediate fluid may be stationary or it may be circulating.

Consequently, when the oxygen is heated by indirect heat exchange, an intermediate fluid is heated by direct heat exchange with the hot flue gas to generate hot intermediate fluid and the oxygen is heated by direct heat exchange with the hot intermediate fluid. In that case, the intermediate fluid is preferably heated by direct heat exchange with the hot flue gas in a secondary heat exchanger and the oxygen is preheated by direct heat exchange with the hot intermediate fluid in a primary heat exchanger.

According to one embodiment, the intermediate fluid circulates between the primary and the secondary heat exchanger in a closed loop. According to an alternative embodiment, which is of particular interest when the temperature of the tempered intermediate fluid downstream of the primary heat exchanger remains relatively high, the intermediate fluid may find used in other processes downstream of the secondary heat exchanger, for example as a heating or drying medium. The intermediate fluid is typically a gas, such as air or nitrogen, but it may also be a liquid, such as metal with low melting temperature, for example lead.

Although the equipment for indirect heat exchange between the hot flue gas and the oxygen may be more complex than the equipment for direct heat exchange between the hot flue gas and the oxygen, indirect heat exchange presents a number of advantages. An important advantage is increased safety when hot flue gas is used to heat oxygen with a high O₂ concentration to high temperatures of, for example 600°C or more, in particular of 900°C or more, due to the highly reactive and corrosive nature of oxygen at those temperatures. By using a "clean" and mainly (for more than 50%vol) inert (as regards combustion) intermediate fluid, such as nitrogen or air, no reaction can take place between the oxygen and combustible matter the hot flue gas (or any fouling of the oxygen preheating installation by the hot flue gas) when the first or the second heat exchange wall were to be perforated after prolonged use. Indeed, even in the unlikely event of both the first and the second heat exchange wall being simultaneously perforated little or no reaction between the oxygen and hot flue gas or fouling would occur due to the buffer effect of the intermediate fluid. Another advantage of the indirect heat exchange is that it enables most of the heat transport from one location to another to be effected with a clean intermediate fluid, so that, on the one hand, the hot flue gas, with its inherent potential for fouling, can essentially be restricted to one location where the combustion of fuel with oxidizer takes place, and so that, on the other hand, the hot oxygen, with its potential for corrosion of transport ducts, remains restricted to the vicinity of the blast furnace itself.

A less complex oxygen preheating installation may be used when the oxygen is heated by direct heat exchange between oxygen and the hot flue gas in a heat exchanger, referred to as primary heat exchanger.

It will be appreciated that such oxygen preheating installations for heating oxygen by direct or indirect heat exchange are highly flexible and can also be used for supplying unheated oxygen to the blast furnace when no hot flue gas is generated or supplied to the corresponding heat exchanger.

If, downstream of this primary heat exchanger, the temperature of the tempered flue gas is still quite high, the tempered flue gas may be used as a heat source in further equipment downstream of the primary heat exchanger and/or may, at least in part be recycled and mixed with hot flue gas generated by the combustion of fuel with oxidizer upstream of the primary heat exchanger.

In order to limit the costs for oxygen preheating, air may be used as the oxidizer for combusting fuel.

Costs may likewise be reduced using a fuel which contains a non-recycled portion of the blast furnace gas (without or after CO₂-extraction) and/or coke oven gas, in particular at least part of the coke oven gas generated by a coke oven or a coke oven battery which produces coke which is supplied to said blast furnace. Other fuels, such as natural gas, oil, coal, etc., may be used alone or in combination with blast furnace gas and/or coke oven gas, depending on their availability and cost and the energy requirement for heating oxygen.

In the present context, the term "coke oven gas" includes reformed coke oven gas (reformed inter alia to eliminate hydrocarbons, for example by steam reforming or CO₂ reforming)

According to a specific embodiment of the present invention, in addition to hot oxygen, hot blast air is also supplied to the blast furnace. In that case, the process of the invention also comprises the steps of heating blast air, with an O₂-content of from 21 %vol O₂ to 35%vol O₂, in an air preheating installation, such as one or more hot stoves, to obtain hot blast air and of introducing the hot blast air into the blast furnace. When the O₂-content of the blast air is above 21 %vol O₂ the air is O₂-enriched. When the O₂-content is 21 %vol O₂, the air is not enriched.

At least part of the hot oxygen is then preferably mixed with the hot blast air before they are introduced into the blast furnace so as to achieve a higher O₂-content of the combined blast gas.

The blast furnace typically comprises blast tuyeres. In that case, at least part of the hot oxygen is supplied to the blast furnace via the tuyeres. When the blast furnace comprises a tuyere header (known as "bustle pipe" in the industry), at least part of the hot oxygen may be mixed with the hot blast air in the tuyere header.

It may also be useful to inject at least part of the hot oxygen separately from the hot blast air, for example directly into the shaft or, in particular, via tuyeres for hot oxygen injection.

In particular if enough recycled blast furnace gas is available to substantially replace the hot air volume in the blast furnace, the hot oxygen can be injected into the furnace separately from the recycled blast furnace gas through tuyeres or through a separate header system.

For extracting CO₂ from the blast furnace gas, pressure swing adsorption (PSA) is a particularly useful process, preferably vacuum pressure swing adsorption.

In accordance with the present invention, the oxygen may be heated to a temperature between 50°C and 1300°C, preferably between 400°C and 1300°C, more preferably between 600°C and 1300°C and most preferably between 800°C and 1300°C, ore even more.

The hot oxygen leaves the oxygen preheating installation preferably at a pressure between 1.0 bara and 7.0 bara, more preferably between 2.0 bara and 5.5 bara and most preferably between 3.0 bara and 5.0 bara.

As indicated above, the blast-furnace process may be a process for producing iron, for producing ferrous alloy or for producing non-ferrous metal or alloys.

The present invention also relates to a blast furnace plant adapted for use in the process of the invention.

The plant of the invention comprises a blast furnace for producing metal from ore, such as, for example, iron from iron ore, ferro-manganese from manganese ores, non-ferrous metals, such as lead from lead concentrates, an oxygen supply installation for supplying oxygen to the blast furnace and a recycle loop for drawing blast furnace gas from the blast furnace and for recycling part of the blast furnace gas back into the blast furnace. The recycle loop comprises a CO₂-extraction installation, such as a CO₂ PSA installation or a CO₂ VPSA installation or an installation for the chemical extraction of CO₂, upstream of the blast furnace for extracting CO₂ from the blast furnace gas, thereby obtaining CO₂-lean blast furnace gas.

According to the invention, the oxygen supply installation comprises an oxygen preheating installation upstream of the blast furnace for heating the oxygen before it is supplied to the blast furnace.

The blast furnace gas recycle loop may likewise comprise a gas preheating installation for heating the CO₂-lean blast furnace gas located downstream of the CO₂-extraction installation and upstream of the blast furnace, whereby said gas preheating installation may in particular comprise one or more hot stoves.

According to a preferred embodiment, an oxygen preheating installation is used as described in co-pending European patent application EP 12306253.1.

For indirect heat exchange between the hot flue gas and the oxygen, such an oxygen preheating installation may be equipped with a heat exchange device for heating the oxygen by indirect heat exchange with the hot flue gas, in which the hot flue gas is separated from a stationary or circulating intermediate fluid by a first solid heat exchange wall, for heat exchange across said first wall between the hot flue gas and the intermediate fluid, and in which the intermediate fluid is furthermore separated from the oxygen by a second solid heat exchange wall, for heat exchange across said second wall between the intermediate fluid and the oxygen. Alternatively, the oxygen preheating installation may be equipped with a primary and a secondary heat exchanger for heating the oxygen by indirect heat exchange with the hot flue gas, whereby, (i) in the secondary heat exchanger the hot flue gas is separated from the intermediate fluid by a first solid heat exchange wall for direct heat exchange across said first wall between the hot flue gas and the intermediate fluid, and (ii) in the primary heat exchanger, the intermediate fluid is separated from the oxygen by a second solid heat exchange wall for direct heat exchange across said second wall between the intermediate fluid and the oxygen. In the latter case, the oxygen preheating installation may advantageously comprise a pump for circulating the intermediate fluid between the secondary and the primary heat exchanger. However, recirculation of the intermediate fluid between the primary and secondary heat exchanger is not obligatory.

When direct heat exchange between the hot flue gas and the oxygen is intended, the oxygen preheating installation comprises a primary heat exchanger for the heating of the oxygen by direct heat exchange with the hot flue gas.

For safety reasons, said primary heat exchanger is preferably not integrated in the combustion chamber of the oxygen preheating installation. A transport duct is then provided for transporting hot flue gas from the combustion chamber to the primary heat exchanger. The oxygen preheating installation may also comprise a recycling duct for transporting at least part of the flue gas back from the primary heat exchanger to the combustion chamber for increased energy efficiency.

As explained above, oxygen preheating installation as described in co-pending European patent application EP 12306253.1 is highly flexible and can, for example, be used to supply unheated oxygen to the blast furnace, when no heat exchange takes place in the primary heat exchanger.

When air is used as combustion oxidizer in the combustion chamber, the blast-furnace plant typically comprises an air compressor for supplying combustion air oxygen to the combustion chamber. Said air compressor may be specifically dedicated to the oxygen preheating installation or may supply compressed air to a number of installations of the blast-furnace plant.

The combustion chamber is advantageously connected to a blast furnace gas outlet of the blast furnace for supplying a second, non-recycled, portion of the blast furnace gas as fuel to the combustion chamber.

When a coke oven or coke oven battery is included in the blast-furnace plant, the combustion chamber is preferably similarly connected to a coke oven gas outlet of a coke oven or coke oven battery for supplying coke oven gas as fuel to the combustion chamber. An additional fuel source, such as a source of natural gas, oil, coal, etc., may also be present for supplying other fuel to the combustion chamber, alone or in combination with coke oven gas and/or blast furnace gas.

A plant of the invention may further comprise an air supply installation for supplying air or oxygen-enriched air having an oxygen content of at most 35%vol O₂ to the blast furnace in addition to the hot oxygen, whereby said air supply installation comprising an air preheating installation upstream of the blast furnace for heating the air or oxygen-enriched air before it is supplied to the blast furnace.

A blast furnace normally comprises tuyeres for the injection of hot blast into the blast furnace. Said tuyeres may be used not only to inject the hot blast air, but also the hot oxygen into the blast furnace. Thereto the hot blast air outlet of the blast air preheating installation is connected to the tuyeres for supplying hot blast air thereto and the hot oxygen outlet of the oxygen preheating installation is connected to the tuyeres for supplying hot oxygen thereto. Such blast furnaces typically also comprise a tuyere header ("bustle pipe"). In that case, it may be preferable to mix the hot blast air and the hot oxygen in the tuyere header upstream of the tuyeres. Thereto, the hot blast air outlet and the hot oxygen outlet are connected to the tuyeres via the tuyere header. The hot blast air and the hot oxygen may also be mixed upstream of the tuyere header.

It may also be advantageous to inject all or part of the hot oxygen into the blast furnace separately from the blast air, for example through dedicated oxygen tuyeres. In that case, the oxygen supply installation and the blast air supply installation of the plant are arranged so as to permit such a separate injection.

The CO₂-extraction installation may be a CO₂ PSA installation, and in particular a CO₂ VPSA installation. It can also be an installation that chemically extracts CO₂.

The blast furnace plant may also comprise an oxygen plant, such as for example, an air separation unit for the production of the oxygen to be supplied to the blast furnace.

The present invention also relates to the use of any one of the above-described embodiments of the blast-furnace plant in the process according to the invention, in particular for the production of iron from iron ore, for the production of ferrous alloys, such as ferro-manganese from manganese ores, or for the production of non-ferrous metals, such as lead from lead concentrates.

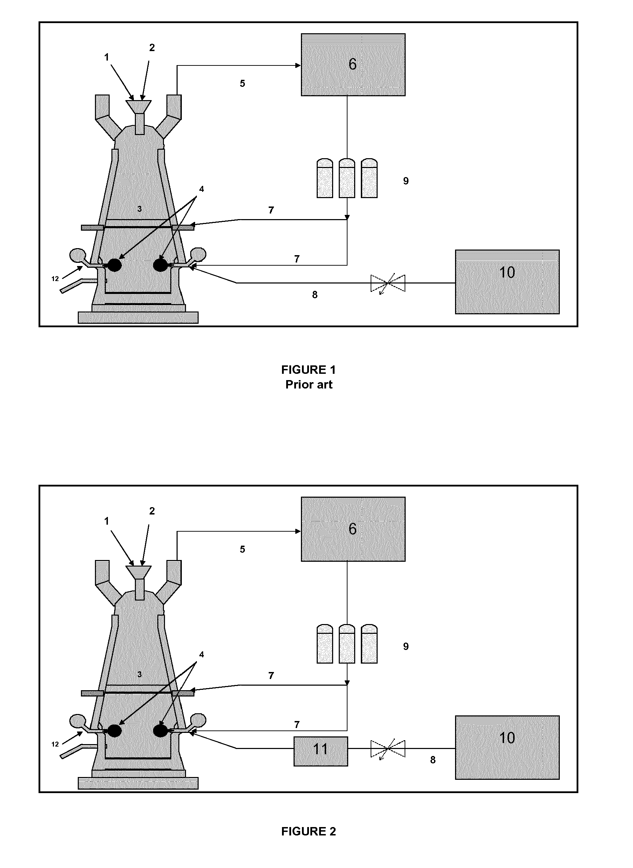

The present invention and its advantages are further illustrated with reference to the enclosed figures 1 to 3.

Figure 1 schematically shows a prior art type blast-furnace plant with a blast furnace gas recycle loop. The recycle loop comprises a CO₂ VPSA installation and a set of hot stoves. The recycle loop draws blast furnace gas (top gas) from the blast furnace. CO₂ is extracted from the blast furnace gas in the CO₂ VPSA installation so as to obtain CO₂-lean blast furnace gas. The CO₂-lean blast furnace gas thus obtained is heated in the hot stoves so as to obtain hot CO₂-lean blast furnace gas. The hot CO₂-lean blast furnace gas is recycled to the blast furnace. One portion is injected directly into the shaft. A further portion of the hot CO₂-lean blast furnace gas is injected into the blast furnace through the tuyeres, together with unheated oxygen.

Figure 2 is a schematic representation of a blast-furnace plant according to the invention of a type similar to the one shown in figure 1.

In the plant according to the invention, the oxygen is heated to a temperature of 600°C or more in an oxygen preheating installation which is part of the oxygen supply installation and which is located upstream of to blast furnace. The parts of the oxygen preheating installation which come into contact with the hot oxygen are constructed of materials specifically selected to withstand the corrosive nature of hot oxygen, such as Inconel 600®, Furthermore, throughout the oxygen supply installation, the oxygen is kept separated from combustible matter. As a consequence, the oxygen heated to a wide range of temperatures (for example up to 1300°C) can be supplied to the blast furnace.

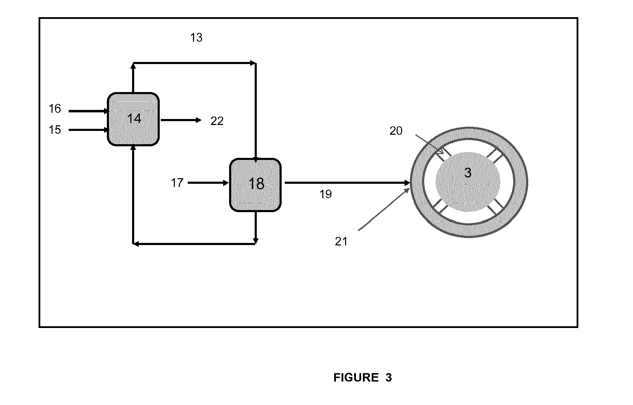

Figure 3 is a schematic diagram of an oxygen preheating installation for use in the blast-furnace plant of figure 2 and its connection to the blast furnace, and more specifically to the tuyere header of the blast furnace. Although only four tuyeres are shown in figure 3, the blast furnace may comprise a substantially greater number of tuyeres, for example of the order of forty.

### Example 1:

Table 1 illustrates some advantages of the invention as can be achieved using the blast-furnace plant of figure 2:

Case 0 corresponds to the use of the prior art ironmaking plant illustrated in figure 1, in which the hot CO₂-lean blast furnace gas is introduced into the blast furnace at 900°C and at tuyere level only, together with unheated oxygen.

Case 1 illustrates corresponds to the use of the ironmaking plant according to the invention as illustrated in figure 1, whereby likewise, the hot CO₂-lean blast furnace gas is introduced into the blast furnace at tuyere level only, but this time together with hot oxygen.

It was found that, for identical iron production rate, the invention enabled to maintain the required RAFT, to reduce coke consumption (delta = -25 kg/thm), significantly to lower the temperature to which the CO₂-lean blast furnace gas is heated (thereby increasing safety and longevity of the gas hot stove operation) and this at a lower level of oxygen consumption. A further interesting feature is the lower exit temperature of the blast furnace gas form the furnace (in combination with the lower volume of blast furnace gas generated).

**Table 1**

| | Unit | Case 0 | Case 1 |
|---|---|---|---|
| Hot metal (hm) | t/day | 37 | 37 |
| RAFT | °C | 1950.0 | 1950.0 |
| Top gas volume | Nm3/t(hm) | 1527.8 | 1298.6 |
| Top gas temperature | °C | 219.7 | 103.3 |
| Coke consumption | kg/t(hm) | 300.5 | 276.5 |
| Delta coke cons. | kg/t(hm) | | -24.1 |
| Oxygen cons. | Nm3/t(hm) | 304.3 | 259.7 |
| Oxygen temp. at tuyere. | °C | 25 | 1000 |
| CO₂-lean gas temperature at tuyeres | °C | 900 | 400 |

### Legend of figures 1 to 3:

1: ore
2: coke
3: blast furnace
4: raceway
5: blast furnace gas
6: CO₂-extraction installation
7: hot CO₂-lean blast furnace gas
8: cold oxygen
9: gas hot stoves
10: oxygen plant (air separation unit)
11: oxygen preheating installation
12: coal supply to tuyeres
13: hot flue gas
14: combustion chamber
15: fuel
16: oxidizer
17: cold oxygen
18: primary direct heat exchanger
19: hot oxygen
20: tuyere
21: tuyere header
22: flue gas purge

## Claims

1. Process for producing metal from ore in a blast furnace , whereby:
• the blast furnace further generates blast furnace gas,
• oxygen is introduced into the blast furnace,
• CO₂ is extracted from the blast furnace gas to generate CO₂-lean blast furnace gas, and
• at least part or the CO₂-lean blast furnace gas introduced into the blast furnace,
**characterized in that** the process comprises the step of heating the oxygen in an oxygen preheating installation upstream of the blast furnace.

2. Process according to claim 1, whereby the CO₂-lean gas is heated in a gas preheating installation upstream of the blast furnace.

3. Process according to any one of the preceding claims, whereby the oxygen is heated in the oxygen preheating installation to a temperature between 50°C and 1300°C, preferably between 400°C and 1300°C.

4. Process according to any one of the preceding claims, whereby in said oxygen preheating installation:
• hot flue gas is generated by combusting fuel with oxidizer, and
• the oxygen is heated by direct or indirect heat exchange with the hot flue gas.

5. Blast-furnace process according to any one of the preceding claims, further comprising the steps of heating blast air, with an O₂-content of from 21%vol O₂ to 35%vol O₂, in an air preheating installation to obtain hot blast air and of introducing the hot blast air into the blast furnace.

6. Process according to claim 5, whereby at least part of the hot oxygen is mixed with the hot blast air before they are introduced into the blast furnace.

7. Process according to claim 5 or 6, whereby at least part of the hot oxygen is introduced to the blast furnace separately from the hot blast air, preferably directly into the shaft or via tuyeres.

8. Process according to any one of the preceding claims, whereby CO₂ is extracted from the blast furnace gas by by physical extraction, preferably by PSA or VPSA, or by chemical extraction.

9. Plant comprising:
• a blast furnace for producing metal from ore,
• an oxygen supply installation for supplying oxygen to the blast furnace,
• a recycle loop for drawing blast furnace gas from the blast furnace and for recycling part of the blast furnace gas back into the blast furnace, the recycle loop comprising a CO₂-extraction installation upstream of the blast furnace for extracting CO₂ from the blast furnace gas so as to obtain CO₂-lean blast furnace gas,
**characterized in that** the oxygen supply installation comprises an oxygen preheating installation upstream of the blast furnace for heating the oxygen before it is supplied to the blast furnace.

10. Plant according to claim 9, whereby the recycle loop comprises a gas preheating installation downstream of the CO₂-extraction installation for heating the CO₂-lean blast furnace gas upstream of the blast furnace.

11. Plant according to claim 9 or 10, whereby the oxygen preheating installation comprises:
• a combustion chamber for combusting fuel with oxidizer so as to generate hot flue gas, and
• one or more heat exchangers for heating the oxygen by direct or indirect heat exchange with the hot flue gas generated in the combustion chamber.

12. Plant according to any one of claims 9 to 11, further comprising an air supply installation for the supply of air or oxygen-enriched air having an oxygen content of at most 35%vol O₂ to the blast furnace, said air supply installation comprising an air preheating installation upstream of the blast furnace for heating the air or oxygen-enriched air before it is supplied to the blast furnace.

13. Plant according to claim 12, whereby the oxygen supply installation and the air supply installation are arranged in use so as to mix at least part of the heated oxygen with the heated air or oxygen-enriched air upstream of or at the tuyeres of the blast furnace and/or so as to inject at least part of the heated oxygen separately from the blast air into the blast furnace.

14. Plant according to any one of claims 9 to 13, whereby the CO₂-extraction installation is a physical CO₂-extraction installation, preferably a PSA installation or a VPSA installation, or a chemical CO₂-extraction installation.

15. Plant according to any one of claims 9 to 14, whereby the oxygen supply installation comprises an oxygen production plant as oxygen source, preferably an air separation unit.
